# EUROPÄISCHE PATENTSCHRIFT

(11) **EP 1 189 955 B1**
(45) Veröffentlichungstag und Bekanntmachung des Hinweises auf die Patenterteilung: **16.07.2003**
(21) Anmeldenummer: 00925113.3
(22) Anmeldetag: 14.03.2000
(51) Int. Cl.: C08F 220/04, C04B 24/26, C08F 216/14

(54) **COPOLYMERE AUF BASIS VON UNGESÄTTIGTEN MONO- ODER DICARBONSÄURE-DERIVATEN UND OXYALKYLENGLYKOL-ALKENYLETHERN, VERFAHREN ZU DEREN HERSTELLUNG UND IHRE VERWENDUNG**
COPOLYMERS BASED ON UNSATURATED MONO- OR DICARBOXYLIC ACID DERIVATIVES AND OXYALKYLENE GLYCOL ALKENYL ETHERS, METHOD FOR THE PRODUCTION AND USE THEREOF
COPOLYMERES A BASE DE DERIVES D'ACIDE MONOCARBOXYLIQUE OU DICARBOXYLIQUE INSATURES ET D'ALCENYLETHERS D'OXYALKYLENEGLYCOL, LEUR PROCEDE DE PRODUCTION ET LEUR UTILISATION

(30) Priorität: 11.06.1999 DE 19926611
(43) Veröffentlichungstag der Anmeldung: 27.03.2002
(73) Patentinhaber: Degussa Construction Chemicals GmbH, 83308 Trostberg (DE)
(72) Erfinder: ALBRECHT, Gerhard, 83342 Tacherting (DE); HÜBSCH, Christian, 83703 Gmund (DE); LEITNER, Hubert, 8967 Haus/Ennstal (AT); GRASSL, Harald, 83471 Schönau (DE); KERN, Alfred, 84558 Kirchweidach (DE)
(74) Vertreter: Huber, Bernhard, Dipl.-Chem.
(86) Internationale Anmeldenummer: EP0002251
(87) Internationale Veröffentlichungsnummer: WO00077058

(56) Entgegenhaltungen:
- EP-A- 0 736 553
- EP-A- 0 894 811

## Beschreibung

Die vorliegende Erfindung betrifft Copolymere auf Basis von ungesättigten Mono- oder Dicarbonsäure-Derivaten und Oxyalkylenglykol-Alkenylethern, Verfahren zu deren Herstellung sowie die Verwendung dieser Copolymere als Zusatzmittel für wässirge Suspensionen anorganischer oder organischer Feststoffe.

Es ist bekannt, dass man wässrigen Aufschlämmungen von pulverförmigen anorganischen oder organischen Substanzen wie Tonen, Porzellanschlicker, Silikatmehl, Kreide, Ruß, Gesteinsmehl, Pigmenten, Talkum, Kunststoffpulvern und hydraulischen Bindemitteln zur Verbesserung ihrer Verarbeitbarkeit, d.h. Knetbarkeit, Streichfähigkeit, Spritzbarkeit, Pumpbarkeit oder Fließfähigkeit, oft Zusatzmittel in Form von Dispergiermitteln zusetzt. Diese in der Regel ionische Gruppen enthaltenden Zusatzmittel sind in der Lage, Feststoffagglomerate aufzubrechen, die gebildeten Teilchen zu dispergieren und auf diese Weise die Verarbeitbarkeit speziell von hochkonzentrierten Suspensionen zu verbessern. Dieser Effekt wird gezielt auch bei der Herstellung von Baustoffmischungen auf der Basis von Zement, Kalk sowie calciumsulfatbasierenden hydraulischen Bindemitteln, gegebenenfalls auch im Gemisch mit organischen (z.B. bituminösen) Anteilen und weiterhin für keramische Massen, Feuerfestmassen und Ölfeldbausteine ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich als für den nachfolgenden Hydratations- bzw. Erhärtungsprozess notwendig wäre. Der durch das überschüssige, später verdunstende Wasser gebildete Hohlraumanteil im Baukörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel sind vor allem Polykondensationsprodukte auf Basis von Naphthalin- oder Alkylnaphthalinsulfonsäuren (vgl. EP-A-0 214 412) bzw. Sulfonsäuregruppen enthaltende Melamin-Formaldehydharze (vgl. DE-PS 16 71 017) bekannt.

Nachteilig bei diesen Zusatzmitteln ist die Tatsache, dass ihre ausgezeichnete verflüssigende Wirkung insbesondere im Betonbau nur über eine kurze Zeitspanne bestehen bleibt. Der Abfall der Verarbeitbarkeit von Betonmischungen ("Slump-loss") in kurzer Zeit kann insbesondere dort zu Problemen führen, wo zwischen Herstellung und Einbau des Frischbetons, beispielsweise durch lange Förder- und Transportwege, ein großer Zeitraum liegt.

Ein zusätzliches Problem ergibt sich bei der Anwendung derartiger Fließmittel im Bergbau und im Innenbereich (Gipskartonplattentrocknung, Anhydritfließestrich-Anwendungen, Betonfertigteilherstellung), da es zur Freisetzung des in den Produkten herstellungsbedingt enthaltenen toxischen Formaldehyds und damit zu beträchtlichen arbeitshygienischen Belastungen kommen kann. Aus diesem Grund wurde auch schon versucht, stattdessen formaldehydfreie Betonfließmittel aus Maleinsäuremonoestern und Styrol, beispielsweise entsprechend der EP-A-0 306 449 zu entwickeln. Die Fließwirkung von Betonmischungen kann mit Hilfe dieser Zusatzmittel über einen ausreichend langen Zeitraum aufrechterhalten werden, jedoch geht die ursprünglich vorhandene, sehr hohe Dispergierwirkung nach Lagerung der wässrigen Zubereitung des Fließmittels, bedingt durch die Hydrolyse des polymeren Esters, sehr schnell verloren.

Dieses Problem tritt bei Fließmitteln auf Basis von Alkylpolyethylenglykolallylethern und Maleinsäureanhydrid entsprechend der EP-A- 0 373 621 nicht auf. Jedoch handelt es sich bei diesen Produkten, ähnlich wie bei den zuvor beschriebenen, um oberflächenaktive Verbindungen, die unerwünscht hohe Anteile von Luftporen in die Betonmischung einführen, woraus Einbußen bei der Fertigkeit und Beständigkeit des erhärteten Baustoffs resultieren.

Aus diesem Grund ist es erforderlich, den wässrigen Lösungen dieser Polymerverbindungen Antischaummittel, wie z.B. Tributylphosphat, Silikonderivate und verschiedene wasserunlösliche Alkohole im Konzentrationsbereich von 0,1 bis 2 Gew.-%, bezogen auf den Feststoffgehalt, zuzusetzen. Das Einmischen dieser Komponenten und die Aufrechterhaltung einer lagerstabilen homogenen Form der entsprechenden Formulierungen gestaltet sich auch selbst dann recht schwierig, wenn diese Antischaummittel in Form von Emulsionen zugesetzt werden.

Durch den vollständigen oder zumindest teilweisen Einbau einer entschäumend oder antilufteinführenden Struktureinheit in das Copolymer kann das Problem der Entmischung gemäß der DE 195 13 126 A1 gelöst werden.

Es hat sich jedoch gezeigt, dass die hohe Wirksamkeit und der geringe "Slump-loss" der hier beschriebenen Copolymere oft zu unzureichenden 24 Stunden-Festigkeiten des Betons führt. Auch weisen derartige Copolymere insbesondere dort nicht die optimalen Eigenschaften auf, wo mit geringstmöglichem Wasseranteil ein besonders dicht gefügter und daher hochfester und hochbeständiger Beton erzeugt und auf eine Dampfhärtung (Fertigteilindustrie) zur Beschleunigung des Erhärtungsprozesses verzichtet werden soll.

Der Erfindung liegt daher die Aufgabe zugrunde, neue Copolymere bereitzustellen, welche die genannten Nachteile der bekannten Mittel nicht aufweisen, d.h. die schon bei geringer Dosierung die Verarbeitbarkeit hochkonzentrierter Baustoffmischungen praxisgerecht lange aufrecht erhalten und gleichzeitig erhöhte Festigkeit im erhärteten Zustand des Baustoffs durch eine extreme Absenkung des Wasser/Bindemittel-Verhältnisses ergeben.

Diese Aufgabe wird erfindungsgemäß gelöst durch Copolymere auf Basis der Reste von ungesättigten Mono- oder Dicarbonsäure-Derivaten und Oxyalkylenglykol-Alkenylethern, welche dadurch gekennzeichnet sind, dass sie
a) 51 bis 95 Mol.-% Baugruppen der Formel la und/oder Ib und/oder Ic 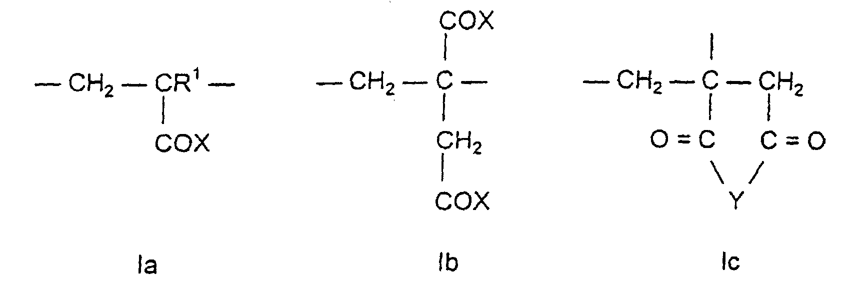 worin
   - R¹ =: Wasserstoff oder einen aliphatischen Kohlenwasserstoffrest mit 1 bis 20 C-Atomen,
   - X =: OₐM, -O-(CₘH₂ₘO)ₙ-R², -NH-(CₘH₂ₘO)ₙ-R²,
   - M =: Wasserstoff, ein ein- oder zweiwertiges Metallkation, ein Ammoniumion oder einen organischen Aminrest,
   - a =: ½ oder 1,
   - R² =: Wasserstoff, einen aliphatischen Kohlenwasserstoffrest mit 1 bis 20 C-Atomen, einen cycloaliphatischen Kohlenwasserstoffrest mit 5 bis 8 C-Atomen, einen gegebenenfalls substituierten Arylrest mit 6 bis 14 C-Atomen,
   - Y =: O, NR²,
   - m =: 2 bis 4 und
   - n =: 0 bis 200
   bedeuten,
b) 1 bis 48,9 Mol-% Baugruppen der allgemeinen Formel II 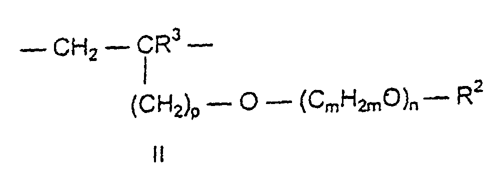 worin
   - R³: Wasserstoff oder einen aliphatischen Kohlenwasserstoffrest mit 1 bis 5 C-Atomen
   - p: 0 bis 3
   bedeuten und R², m und n die oben genannte Bedeutung besitzen,
c) 0,1 bis 5 Mol-% Baugruppen der Formel IIIa oder IIIb 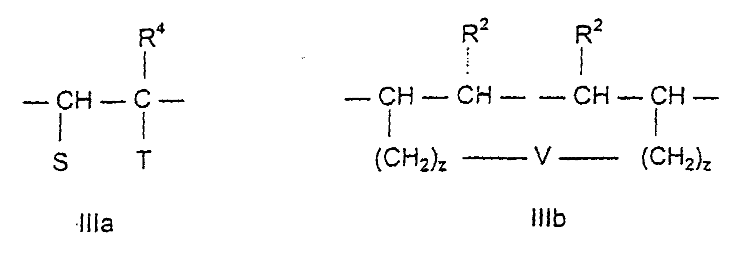 worin
   - S =: H, -COOₐM, -COOR⁵
   - T =: 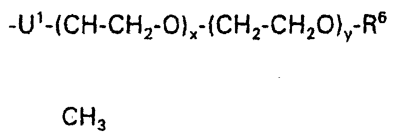 -W-R⁷
   -CO-[NH-(CH₂)₃]ₛ-W-R⁷
   -CO-O-(CH₂)_{z}-W-R⁷
   -(CH₂)_{z}-V-(CH₂)_{z}-CH=CH-R²
   -COOR⁵ im Falle von S = -COOR⁵ oder COOₐM
   - U¹ =: -CO-NH-, -O-, -CH₂O-
   - U² =: -NH-CO-, -O-, -OCH₂-
   - V =: -O-CO-C₆H₄-CO-O- oder -W- 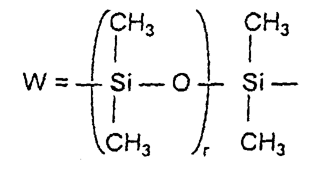
   - R⁴ =: H, CH₃
   - R⁵ =: aliphatischen Kohlenwasserstoffrest mit 3 bis 20 C-Atomen, cycloaliphatischen Kohlenwasserstoffrest mit 5 bis 8 C-Atomen, Arylrest mit 6 bis 14 C-Atomen
   - R⁶ =: 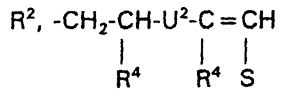
   - R⁷ =:

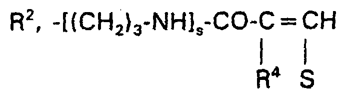

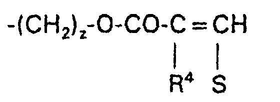

   - r =: 2 bis 100
   - s =: 1, 2
   - z =: 0 bis 4
   - x =: 1 bis 150
   - y =: 0 bis 15
   bedeuten sowie
d) 0 bis 47,9 Mol Baugruppen der allgemeinen Formel IVa und/oder IVb enthalten 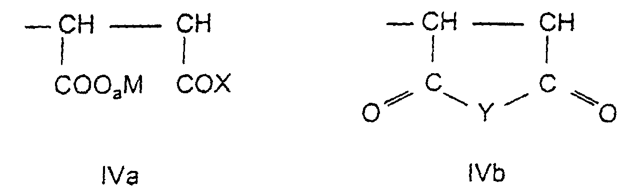
worin a, M, X und Y die oben angegebene Bedeutung besitzen.

Es hat sich überraschenderweise gezeigt, dass die erfindungsgemäßen Copolymere auf der Basis von ungesättigten Mono- oder Dicarbonsäure-Derivaten und Oxyalkylenglykol-Alkenylethern in geringster Dosierung wässrigen Baustoffsuspensionen ausgezeichnete Verarbeitungseigenschaften verleihen, ohne die Festigkeitsentwicklung zu verzögern. Besonders überraschend war die Tatsache, dass eine extreme Absenkung des Wasser/Bindemittel-Anteils noch zu hochfließfähigen Baustoffen mit den erfindungsgemäßen Copolymeren führt und es zu keiner Segregation von einzelnen Bestandteilen der Baustoffmischung kommt.

Die Copolymere der Erfindung enthalten mindestens 3, vorzugsweise jedoch 4 Baugruppen a), b), c) und d). Die erste Baugruppe a) stellt ein Mono- oder Dicarbonsäure-Derivat mit der allgemeinen Formel la, Ib oder Ic dar.

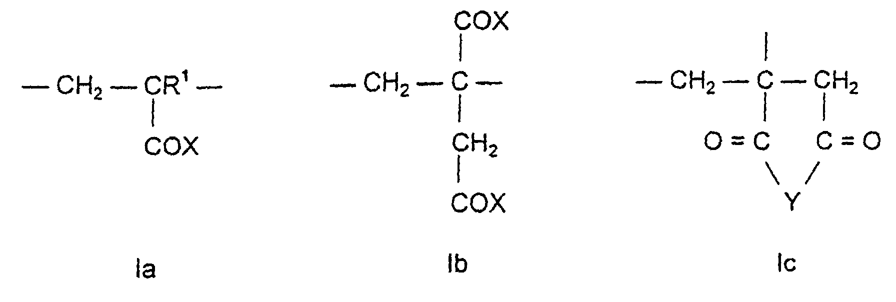

Beim Monocarbonsäure-Derivat la bedeutet R¹ Wasserstoff oder einen aliphatischen Kohlenwasserstoffrest mit 1 bis 20 C-Atomen, vorzugsweise eine Methylgruppe. X in den Strukturen la und Ib steht für -OₐM und/oder -O-(CₘH₂ₘO)ₙ-R² bzw. -NH-(CₘH₂ₘO)ₙ-R² mit folgender Bedeutung für M, a, m, n und R²:

M bedeutet Wasserstoff, ein ein- oder zweiwertiges Metallkation, Ammonium, einen organischen Aminrest sowie a = ½ oder 1, je nachdem, ob es sich bei M um ein ein- oder zweiwertiges Kation handelt. Organische Aminreste sind vorzugsweise substituierte Ammonium-Gruppen, die sich ableiten von primären, sekundären oder tertiären C₁₋₂₀-Alkylaminen, C₁₋₂₀-Alkanolaminen, C₅₋₈-Cycloalkylaminen und C₈₋₁₄-Arylaminen. Beispiele für geeignete Amine von denen sich diese Reste ableiten sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R² kann sein Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der gegebenenfalls noch substituiert sein kann, m = 2 bis 4 sowie n = 0 bis 200. Die aliphatischen Kohlenwasserstoffe können hierbei linear oder verzweigt sowie gesättigt oder ungesättigt sein. Bevorzugte Cycloalkylreste sind Cyclopentyl- oder Cyclohexylreste, bevorzugte Arylreste Phenyl- oder Naphthylreste, die noch durch Gruppen wie -CN, -COOR¹, -R¹, -OR¹ und vorzugsweise durch Hydroxyl-, Carboxyl- oder Sulfonsäuregruppen substituiert sein können.

Anstelle des oder neben dem Dicarbonsäure-Derivat gemäß Formel Ib kann die Baugruppe a) (Mono- oder Dicarbonsäure-Derivat) auch in cyclischer Form entsprechend Formel Ic vorliegen, worin Y = O (Säureanhydrid) oder NR² (Säureimid) darstellen mit der oben bezeichneten Bedeutung für R².

Die zweite Baugruppe b) entspricht Formel II 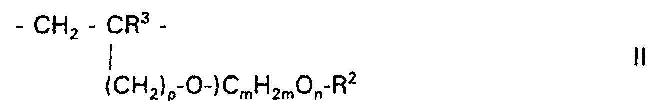 und leitet sich von Oxyalkylenglykol-Alkenylethern ab. m, n und R² besitzen die oben angegebene Bedeutung. R³ bedeutet Wasserstoff oder einen aliphatischen Kohlenwasserstoffrest mit 1 bis 5 C-Atomen, der linear oder verzweigt oder auch ungesättigt sein kann. p kann Werte zwischen 0 und 3 annehmen.

Vorzugsweise bedeuten in den Formeln la, Ib und II m = 2 und/oder 3, sodass es sich um Polyalkylenoxid-Gruppen handelt, die sich von Polyethylenoxid und/oder Polypropylenoxid ableiten. In einer weiteren bevorzugten Ausführungsform bedeutet p in Formel II 0 oder 1, d.h. es handelt sich um Vinyl- und/oder Alkylpolyalkoxylate.

Die dritte Baugruppe c) entspricht der Formel IIIa oder IIIb

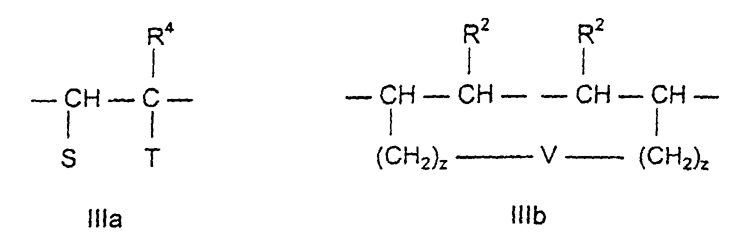

In Formel IIIa kann R⁴ = H oder CH₃ sein, je nachdem es sich um Acryl- oder Methacrylsäure-Derivate handelt. S kann hierbei -H, -COOₐM oder -COOR⁵ bedeuten, wobei a und M die oben erwähnte Bedeutung besitzen und R⁵ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen ist. Der aliphatische Kohlenwasserstoffrest kann linear oder verzweigt, gesättigt oder ungesättigt sein. Bevorzugte cycloaliphatische Kohlenwasserstoffreste sind Cyclopentyl- oder Cyclohexylreste; bevorzugte Arylreste sind Phenyl- oder Naphthylreste. Im Falle von T = -COOR⁵ ist S = COOₐM oder -COOR⁵. Für den Fall, dass T und S = COOR⁵ sind, leiten sich die entsprechenden Baugruppen von den Dicarbonsäureestern ab.

Neben diesen Esterstruktureinheiten können die Baugruppen c) noch andere hydrophobe Strukturelemente enthalten. Hierzu gehören die Polypropylenoxid- bzw. Polypropylenoxid-Polyethylenoxid-Derivate der allgemeinen Formel 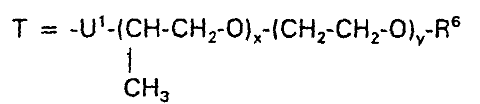 x bedeutet eine Zahl von 1 bis 150 und y von 0 bis 15. Die Polypropylenoxid(-Polyethylenoxid-)-Derivate können hierbei über eine Gruppierung U¹ mit dem Ethylrest der Baugruppe c) entsprechend Formel IIIa verknüpft sein, wobei U¹ = -CO-NH-, -O- oder -CH₂-O bedeutet. Es handelt sich also um die entsprechenden Amid-, Vinyl- oder Allylether der Baugruppe der Formel IIIa. R⁶ kann hierbei wiederum R² (Bedeutung von R² siehe oben) oder 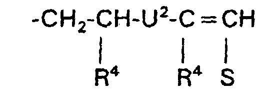 sein, wobei U² = -NH-CO-, -O- oder -OCH₂- bedeutet und S die oben beschriebene Bedeutung besitzt. Diese Verbindungen stellen Polypropylenoxid(-Polyethylenoxid-)-Derivate von den bifunktionellen Alkenylverbindungen entsprechend Formel IIIa dar.

Als weiteres hydrophobes Strukturelement können die Verbindungen der Formel IIIa Polydimethylsiloxan-Gruppen enthalten, was im Formelschema IIIa T =-W-R⁷ entspricht.

W bedeutet 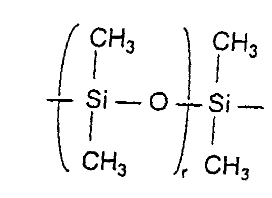 (nachfolgend Polydimethylsiloxan-Gruppierung genannt), R⁷ kann = R² sein und r kann hierbei Werte von 2 bis 100 annehmen.

Die Polydimethylsiloxan-Gruppierung kann nicht nur direkt an den Ethylenrest gemäß Formel IIIa gebunden sein, sondern auch über die Gruppierungen
-CO-[NH-(CH₂)₃]ₛ-W-R⁷ oder -CO-O(CH₂)_{z}-W-R⁷,
wobei R⁷ vorzugsweise = R² bedeutet und s = 1 oder 2 und z = 0 bis 2 bedeuten. R⁷ kann außerdem noch ein Rest der Formel 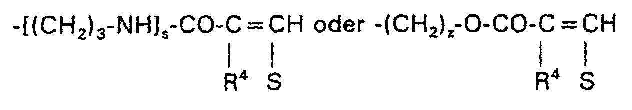 sein.

Dann handelt es sich um die difunktionellen Ethylenverbindungen der Formel IIIa, die über die entsprechenden Amid- oder Estergruppierungen miteinander verknüpft sind und wobei nur eine Ethylengruppe copolymerisiert wurde.

Ähnlich verhält es sich auch mit den Verbindungen gemäß Formel IIIa mit T = (CH₂)_{z}-V-(CH₂)_{z}-CH=CH-R², wobei z = 0 bis 4, V entweder ein Polydimethylsiloxan-Rest W oder ein -O-CO-C₆H₄-CO-O-Rest ist und R² die oben angegebene Bedeutung besitzt. Diese Verbindungen leiten sich von den entsprechenden Dialkenyl-phenyl-dicarbonsäureestern oder Dialkenylpolydimethylsiloxan-Derivaten ab.

Es ist im Rahmen der vorliegenden Erfindung auch möglich, dass nicht nur eine, sondern beide Ethylengruppen der difunktionellen Ethylenverbindungen copolymerisiert sind. Dabei ergeben sich Baugruppen entsprechend der Formel IIIb 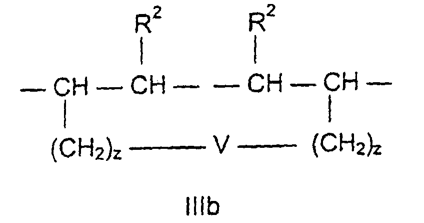 wobei R², V und z die bereits beschriebene Bedeutung besitzen.

Die vierte Baugruppe d) leitet sich ab von einem ungesättigten Dicarbonsäure-Derivat und weistdie allgemeine Formel IVa und/oder IVb auf 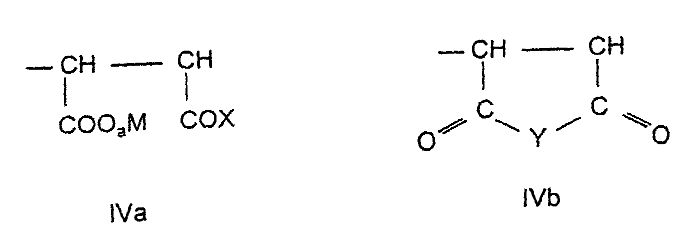 in der a, M, X und Y die oben angegebene Bedeutung haben.

Es ist erfindungswesentlich, dass die Copolymere der Erfindung 51 bis 95 Mol-% Baugruppen der Formel la und/oder Ib und/oder Ic, 1 bis 48,9 Mol-% Baugruppen der Formel II, 0,1 bis 5 Mol-% Baugruppen der Formel IIIa und/oder IIIb und 0 bis 47,9 Mol-%Baugruppen der Formel IVa und/oder IVb enthalten.

Bevorzugt sind Copolymeren, die 55 bis 75 Mol-% Baugruppen der Formel la und/oder Ib, 19,5 bis 39,5 Mol-% Baugruppen der Formel II, 0,5 bis 2 Mol-% Baugruppen der Formel IIIa und/oder IIIb und 5 bis 20 Mol-% Baugruppen der Formel IVa und/oder IVb enthalten.

Gemäß einer bevorzugten Ausführungsform enthalten die erfindungsgemäßen Copolymere zusätzlich noch bis zu 50 Mol-%, insbesondere bis zu 20 Mol-%, bezogen auf die Summe der Baugruppen a bis d, Strukturen, die sich von Monomeren auf Basis von Vinyl- oder (Meth-)Acrylsäure-Derivaten wie Styrol, α-Methylstyrol, Vinylacetat, Vinylpropionat, Ethylen, Propylen, Isobuten, Hydroxyalkyl(meth)acrylate, Acrylamid, Methacrylamid, N-Vinylpyrrolidon, Allylsulfonsäure,Methallylsulfonsäure,Vinylsulfonsäure,Vinylphosphonsäure, AMPS, Methylmethacrylat, Methylacrylat, Butylacrylat, Allylhexylacrylat u.a. ableiten.

Die Anzahl der sich wiederholenden Struktureinheiten in den Copolymeren ist nicht eingeschränkt. Als besonders vorteilhaft haben sich jedoch Copolymere mit mittleren Molekulargewichten von 1000 bis 100.000 g/Mol erwiesen.

Die Herstellung der erfindungsgemäßen Copolymere kann auf verschiedenen Wegen erfolgen. Wesentlich ist hierbei, dass man 51 bis 95 Mol-% eines ungesättigten Mono- oder Dicarbonsäure-Derivats, 1 bis 48,9 Mol-% eines Oxyalkylen-Alkenylethers, 0,1 bis 5 Mol-% einer vinylischen Polyalkylenglykol-, Polysiloxan- oder Esterverbindung und 0 bis 47,9 Mol-% eines Dicarbonsäure-Derivates mit Hilfe eines radikalischen Starters polymerisiert.

Als ungesättigte Mono- oder Dicarbonsäure-Derivate, welche die Baugruppen der Formel la, Ib bzw. Ic bilden, werden vorzugsweise eingesetzt: Acrylsäure, Methacrylsäure, Itaconsäure, Itaconsäureanhydrid, Itaconsäureimid und Itaconsäuremonoamid.

Anstelle von Acrylsäure, Methacrylsäure, Itaconsäure und Itaconsäuremonoamid können auch deren ein- oder zweiwertige Metallsalze, vorzugsweise Natrium-, Kalium-, Calcium- oder Ammoniumsalze verwendet werden.

Handelt es sich bei dem Acryl-, Methacryl- oder Itaconsäurederivat um einen Ester, so werden bevorzugt Derivate verwendet, deren alkoholische Komponente ein Polyalkylenglykol der allgemeinen Formel HO-(CₘH₂ₘO)ₙ-R² ist mit R² = H, aliphatischer Kohlenwasserstoffrest mit 1 bis 20 C-Atomen, cycloaliphatischer Kohlenwasserstoffrest mit 5 bis 8 C-Atomen, gegebenenfalls substituierter Arylrest mit 6 bis 14 C-Atomen sowie m = 2 bis 4 und n = 0 bis 200.

Die bevorzugten Substituenten am Arylrest sind -OH-, -COO⊖- oder -SO₃⊖-Gruppen.

Die ungesättigten Monocarbonsäure-Derivate können nur als Monoester vorliegen, während im Falle der Dicarbonsäure Itaconsäure auch Diesterderivate möglich sind.

Die Derivate der Formel Ia, Ib und Ic können auch als Mischung von veresterten und freien Säuren vorliegen und werden vorzugsweise in einer Menge von 55 bis 75 Mol-% verwendet.

Die zweite erfindungswesentliche Komponente zur Herstellung der erfindungsgemäßen Copolymeren stellt ein Oxyalkylenglykol-Alkenylether dar, der vorzugsweise in einer Menge von 19,5 bis 39,5 Mol-% eingesetzt wird. Bei den bevorzugten Oxyalkylenglykol-Alkenylethern entsprechend der Formel V

CH₂ = CR³-(CH₂)ₚ-O-(CₘH₂ₘO)ₙ-R² V

bedeuten R³ = H oder einen aliphatischen Kohlenwasserstoffrest mit 1 bis 5 C-Atomen und p = 0 bis 3. R², m und n besitzen die bereits oben genannte Bedeutung. Als besonders vorteilhaft hat sich hierbei die Verwendung von Polyethylenglykolmonovinylether (p = 0 und m = 2) erwiesen, wobei n vorzugsweise Werte zwischen 1 und 50 besitzt.

Als dritte erfindungswesentliche Komponente zur Einführung der Baugruppe c) werden vorzugsweise 0,5 bis 2 Mol-% einer vinylischen Polyalkylenglykol-, Polysiloxan- oder Ester-Verbindung eingesetzt. Als bevorzugte vinylische Polyalkylenglykol-Verbindung werden Derivate entsprechend der Formel VI verwendet, 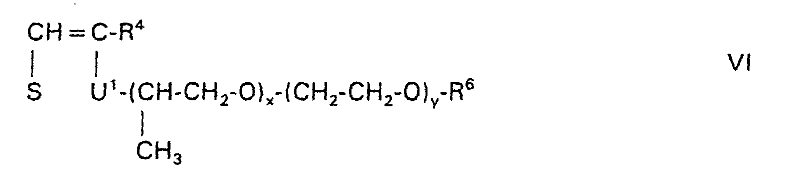 worin S -H, oder COOₐM und U¹ = -CO-NH-, -O- oder -CH₂O- bedeutet, d.h. es handelt sich um die Säureamid-, Vinyl- oder Allylether der entsprechenden Polypropylenglykol- bzw. Polypropylenglykol-Polyethylenglykol-Derivate. x kann eine Zahl von 1 bis 150 und y von 0 bis 15 sein. R⁶ kann entweder = R¹ sein oder 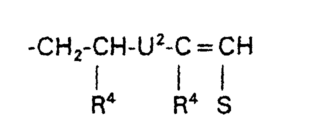 bedeuten, worin U² = -NH-CO-, -O- sowie -OCH₂- und S = -COOₐM und vorzugsweise -H ist.

Im Falle von R⁶ = R² und R² vorzugsweise H handelt es sich um die Polypropylenglykol(-Polyethylenglykol)-Monamide bzw. Ether der entsprechenden Acryl- (S = H, R⁴ = H), Methacryl- (S = H, R⁴ = CH₃) oder Maleinsäure- (S = COOₐM - R⁴ = H)-Derivate. Beispiele für solche Monomere sind Maleinsäure-N-(methylpolypropylenglykol-)monoamid, Maleinsäure-N-(methoxy-polypropylenglykol-polyethylenglykol-monoamid, Polypropylenglykol-vinylether und Polypropylenglykol-allylether.

Im Falle von R⁶ ≠ R² handelt es sich um bifunktionelle Vinylverbindungen, deren Polypropylenglykol-(Polyethylenglykol-)Derivate über Amid- oder Ethergruppen (-O- bzw. -OCH₂-) miteinander verbunden sind. Beispiele für solche Verbindungen sind Polypropylenglykol-bis-maleinamidsäure, Polypropylenglykoldiacrylamid, Polypropylenglykoldimethacrylamid, Polypropylenglykoldivinylether, Polypropylenglykoldiallylether.

Als vinylische Polysiloxan-Verbindung werden Derivate entsprechend der Formel VII bevorzugt, 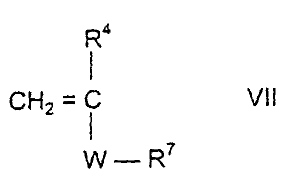 wobei R⁴ = -H oder CH₃, 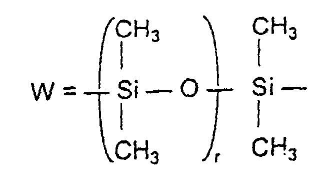 und r = 2 bis 100 und R⁷ =R² ist. Beispiele für solche Monomere sind Monovinylpolydimethylsiloxan.

Als weitere vinylische Polysiloxan-Verbindung können Derivate der Formel VIII verwendet werden, 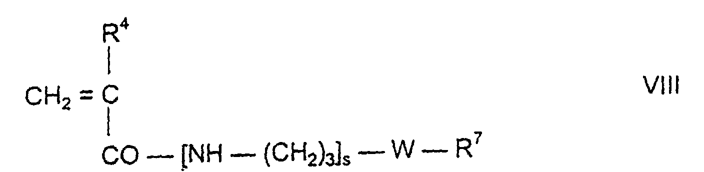 worin s = 1 oder 2 ist, R⁴ und W die oben genannte Bedeutung besitzen und R⁷ entweder = R² oder 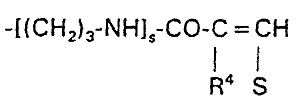 sein kann und S die oben angegebene Bedeutung aufweist und vorzugsweise Wasserstoff oder -COOR⁵ darstellt.

Beispiele für solche Monomere mit einer Vinylfunktion (R⁷ = R²) sind Polydimethylsitoxanpropylmaleinamidsäure oder Polydimethylsiloxandipropylenaminomaleinamidsäure. Im Falle von R⁷ ≠ R² handelt es sich um Divinylverbindungen wie z. B. Polydimethylsiloxan-bis-(propylmaleinamidsäure) oder Polydimethylsiloxan-bis-(dipropylenaminomaleinamidsäure).

Als weitere vinylische Polysiloxan-Verbindung wird vorzugsweise ein Derivat entsprechend der Formel IX verwendet: 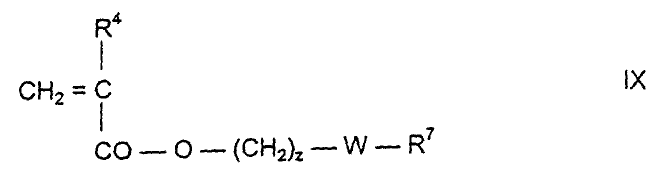 worin z 0 bis 4 ist und R⁴ bzw. W die oben genannte Bedeutung besitzen. R⁷ kann entweder R² oder 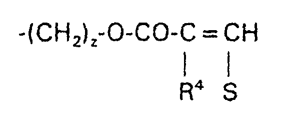 sein, wobei S die oben angegebene Bedeutung aufweist und bevorzugt Wasserstoff bedeutet. Beispiele für solche monovinylischen Verbindungen (R⁷ = R¹) sind Polydimethylsiloxan-(1-propyl-3-acrylat) oder Polydimethylsiloxan-(1-propyl-3-methacrylat).

Im Falle von R⁷ ≠ R² handelt es sich um Divinylverbindungen wie z. B. Polydimethylsiloxan-bis-(1-propyl-3-acrylat) oder Polydimethylsiloxan-bis-(1-propyl-3-methacrylat).

Als vinylische Esterverbindung werden im Rahmen der vorliegenden Erfindung vorzugsweise Derivate der Formel X eingesetzt, 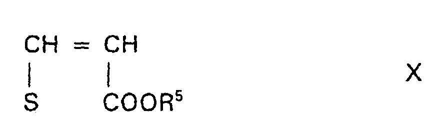 worin S = COOₐM oder - COOR⁵ bedeuten und R⁵ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen ist, a und M besitzen die oben genannte Bedeutung. Beispiele für solche Esterverbindungen sind Di-n-butylmaleinat bzw. -fumarat oder Mono-n-butylmaleinat- bzw. -fumarat.

Desweiteren können auch Verbindungen der Formel XI eingesetzt werden 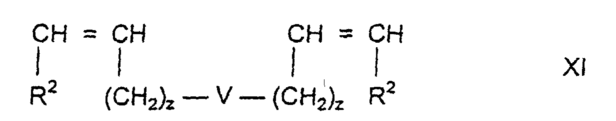 worin z 0 bis 4 ist und R² die oben angegebene Bedeutung besitzt. V kann hierbei W (also eine Polydimethylsiloxan-Gruppierung) sein, was einer Dialkenylpolydimethylsiloxan-Verbindung wie z.B. Divinylpolydimethylsiloxan entspricht. Alternativ hierzu kann V auch -O-CO-C₆H₄-CO-O- sein. Diese Verbindungen stellen Dialkenylphthalsäure-Derivate dar. Ein typisches Beispiel für solche Phthalsäure-Derivate ist Diallylphthalat.

Die Molekulargewichte der Verbindungen, welche die Baugruppe c) bilden, können in weiten Grenzen variiert werden und liegen vorzugsweise zwischen 150 und 10.000.

Als vierte Komponente zur Herstellung der erfindungsgemäßen Copolymere werden vorzugsweise 5 bis 20 Mol-% eines ungesättigten Dicarbonsäure-Derivats der Formel XII:

MₐOOC - CH = CH - COX XII

verwendet, a, M und X die oben bereits angegebene Bedeutung haben.

Für den Fall X = OMₐ leitet sich das ungesättigte Dicarbonsäure-Derivat ab von Maleinsäure, Fumarsäure, ein- oder zweiwertige Metallsalze dieser Dicarbonsäuren, wie dem Natrium-, Kalium-, Calcium- oder Ammoniumsalz bzw. Salze mit einem organischen Aminrest. Monomere, welche die Einheit la bilden, können weiter Polyalkylenglykolmonoester der oben genannten Säuren mit der allgemeinen Formel XIII:

MₐOOC ― CH = CH ― COO ― (CₘH₂ₘO)ₙ ― R²

aufweisen, worin a, m, n und R² die oben angegebene Bedeutung besitzen.

Die vierte Komponente kann sich auch ableiten von den ungesättigten Dicarbonsäureanhydriden und Imiden der allgemeinen Formel XIV (5 bis 20 Mol-%) 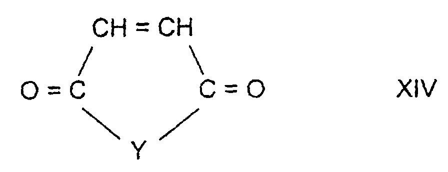 mit der oben angegebenen Bedeutung für Y.

Erfindungsgemäß können nach einer bevorzugten Ausführungsform noch bis zu 50, vorzugsweise bis zu 20 Mol-% auf die Summe der Baugruppen a) bis d) bezogen weitere Monomere wie oben beschrieben eingesetzt werden.

Die Copolymere der Erfindung können nach den üblichen Copolymerisationsmethoden hergestellt werden. Ein besonderer Vorteil besteht darin, dass man erfindungsgemäß ohne Lösemittel oder aber in wässriger Lösung arbeiten kann. In beiden Fällen handelt es sich um drucklose und daher sicherheitstechnisch unbedenkliche Reaktionen.

Wird das Verfahren in wässriger Lösung durchgeführt, so erfolgt die Polymerisation bei 20 bis 100 °C mit Hilfe eines üblichen Radikalstarters, wobei die Konzentration der wässrigen Lösung vorzugsweise auf 30 bis 50 Gew.-% eingestellt wird. Gemäß einer bevorzugten Ausführungsform wird die radikalische Polymerisation im sauren pH-Bereich durchgeführt, insbesondere bei einem pH-Wert zwischen 4,0 und 6,5, wobei die herkömmliche Initiatoren wie H₂O₂ verwendet werden können, ohne dass es zu einer befürchteten Etherspaltung kommt, wodurch die Ausbeuten sehr stark beeinträchtigt würden.

Beim erfindungsgemäßen Verfahren wird vorzugsweise so gearbeitet, dass das ungesättigte Dicarbonsäure-Derivat, welches die Strukturgruppe d) bildet, in teilneutralisierter Form in wässriger Lösung, bevorzugt zusammen mit dem Polymerisationsinitiator vorgelegt wird und die übrigen Monomeren zudosiert werden, sobald die erforderliche Reaktionstemperatur in der Vorlage erreicht ist. Separat können Polymerisations-Hilfsmittel zugegeben werden, welche die Aktivierungsschwelle des vorzugsweise peroxidischen Initiators senken, sodass die Copolymerisation bei relativ niedrigen Temperaturen ablaufen kann. Gemäß einer weiteren bevorzugten Ausführungsform wird das ungesättigte Dicarbonsäure-Derivat als auch der Radikalbildner in separaten oder gemeinsamen Zuläufen der Reaktorvorlage zudosiert. Hierdurch wird das Problem der Wärmeabführung in idealer Weise gelöst.

Es ist aber auch möglich, die die Strukturgruppe b) bildenden Polyoxyalkylenglykol-Alkenylether vorzulegen und das Mono- oder Dicarbonsäure-Derivat (Baugruppe a)) so zuzudosieren, dass eine gleichmäßige Verteilung der Monomereinheiten über die Polymerkette erreicht wird.

Die Art der verwendeten Polymerisationsinitiatoren, -aktivatoren und sonstiger Hilfsmittel, wie z. B. Molekulargewichtsregler, ist nicht kritisch. Als Initiatoren können die üblichen Radikalspender verwendet werden, wie Wasserstoffperoxid, Natrium-, Kalium- oder Ammoniumperoxodisulfat, tert. Butylhydroperoxid, Dibenzoylperoxid, Natriumperoxid, 2,2'-Azobis-(2-amidinopropan)-dihydrochlorid, Azobis-(isobutyronitril) usw. Kommen Redoxsysteme zum Einsatz, so werden z.B. die oben genannten Initiatoren mit reduzierend wirkenden Aktivatoren kombiniert. Beispiele für derartige Reduktionsmittel sind Fe(II)-salze, Natriumhydroxymethansulfinat-Dihydrat, Alkalimetallsulfite und -metabisulfite, Natriumhypophosphit, Hydroxylaminhydrochlorid, Thioharnstoff usw.

Ein besonderer Vorteil der erfindungsgemäßen Copolymere besteht darin, dass sie auch ohne Lösemittel hergestellt werden können, was mit Hilfe der üblichen radikalischen Starter bei Temperaturen zwischen 60 und 150 °C erfolgen kann. Diese Variante ist aus wirtschaftlichen Gründen insbesondere dann vorteilhaft, wenn die erfindungsgemäßen Copolymere in wasserfreier Form direkt ihrer Verwendung zugeführt werden sollen, weil dann eine aufwendige Abtrennung des Lösemittels, insbesondere des Wassers (beispielsweise durch Sprühtrocknung) entfällt.

Die erfindungsgemäßen Copolymere eignen sich hervorragend als Zusatzmittel für wässrige Suspensionen anorganischer und organischer Feststoffe, insbesondere solchen auf der Basis von mineralischen oder bituminösen Bindemitteln wie Zement, Gips, Kalk, Anhydrit oder sonstige Calciumsulfat-basierenden Baustoffen, oder auf Basis von pulverförmigen Dispersionsbindemitteln, wobei sie zweckmäßig in einer Menge von 0,01 bis 10 Gew.-%, insbesondere 0,05 bis 5 Gew.-%, bezogen auf das Gewicht des mineralischen Bindemittels eingesetzt werden. Aber auch in den Bereichen keramische Massen, Feuerfestmassen sowie Ölfeldbaustoffe können die erfindungsgemäßen Copolymere hervorragend eingesetzt werden.

Die nachfolgenden Beispiele sollen die Erfindung näher erläutern.

### Beispiele

### Beispiel 1

In einem 10 I-Doppelwandreaktionsgefäß mit Thermometer, Rührer, Rückflusskühler und zwei Eingängen für separate Zuläufe wurden 3300 g (3,00 Mol) Methylpolyethylenglykol-1 100-monovinylether (mittleres Molekulargewicht 1100 g/Mol) als Schmelze bei 50 °C vorgelegt. Es wurden 3200 g Leitungswasser zugesetzt, wobei eine stark alkalische wässrige Lösung des Vinylethers erhalten wurde. Unter Rühren und Kühlen wurden 58,80 g (0,60 Mol) Maleinsäureanhydrid gelöst in 137,20 g Wasser (entsprechend einer 30 %igen Lösung) sowie separat 10,86 g 20 %ige wässrige Natronlauge zugesetzt, wobei die Temperatur unter 30 °C gehalten wurde.

Anschließend wurden 33,00 g (0,0165 Mol) eines Umsetzungsproduktes aus einem butanolgestarteten monofunktionellen NH₂-terminierten Ethylenoxid/Propylenoxid-Blockpolymerisat(EO4, PO 27; Molekulargewicht 1800 g) mit Maleinsäureanhydrid unter kurzzeitigem intensiven Rühren zugesetzt und nacheinander 930 mg FeSO₄ · 7H₂O, 5,97 g 3-Mercaptopropionsäure und 34,40 g 50 %iges wässriges Wasserstoffperoxid zugesetzt. Bei einer Temperatur von 30 °C wurden anschließend 281,00 g (3,90 Mol) Acrylsäure gelöst in 843 g Leitungswasser (25 %ige Lösung) enthaltend eine zusätzliche Reglermenge von 17,90 g 3-Mercaptopropionsäure über einen Zeitraum von 75 Minuten dem Vorlagegemisch zugesetzt. Separat hierzu erfolgte die Dosierung von 252 ml einer 2 %igen wässrigen Lösung von Natriumhydroxymethansulfinatdihydrat über einen Zeitraum von 97 Minuten, wobei die Temperatur auf maximal 35,8 °C anstieg.

Nach beendeter Zugabe wurde noch 15 Minuten gerührt, bei 30 °C und durch Zugabe von 801,70 g 20 %iger wässriger Natronlauge ein pH-Wert von 6,50 eingestellt. Die gelblich gefärbte trübe wässrige Zubereitung enthielt 41,6 Gew.-% Feststoff. Das gewichtsmittlere Molekulargewicht des Copolymerisates betrug 35 350 g/Mol, Ausbeute: 9220 g.

### Beispiel 2

Es wurde - wie unter Beispiel 1 beschrieben - verfahren, jedoch wurde anstelle des dort verwendeten Vinylethers (MW = 1 100) ein Vinylether mit dem mittleren Molekulargewicht 2000 g/Mol verwendet.

Folgende Einsatzmengen der strukturbildenden Komponenten wurden verwendet:

| | | |
|---|---|---|
| 205,60 g | (2,853 Mol) | Acrylsäure |
| 3156,80 g | (1,5784 Mol) | Methylpolyethylenglykol-2000-monovinylether |
| 47,35 g | (0,025 Mol) | Poly(PO-block-EO)-maleinamidsäure (MW 1900 g/Mol) |
| 92,80 g | (0,946 Mol) | Maleinsäureanhydrid |

Es wurden 8705,2 g eines trüben, gelblich gefärbten Produktes mit 42,0 Gew.-% Feststofferhalten. Das gewichtsmittlere Molekulargewichtlag bei 32150 g/Mol.

### Beispiel 3

Beispiel 1 wurde wiederholt, jedoch wurden anstatt der dort verwendeten Acrylsäure 218,40 g (1,95 Mol) Itaconsäureanhydrid als 25 %ige wässrige Lösung als Zulauf 1 verwendet. Das nach der Neutralisation mit Natronlauge (25 %) erhaltene wässrige Copolymerisat hatte ein gewichtsmittleres Molekulargewicht von 25400 g/Mol (Feststoffgehalt 43,0 Gew.-%).

### Beispiel 4

Es wurde verfahren wie unter Beispiel 1 beschrieben, wobei folgende Änderungen vorgenommen wurden:

### Zusätzlich zu den vorgelegten

| | | |
|---|---|---|
| 58,80 g | (0,60 Mol) | Maleinsäureanhydrid |
| 3300,00 g | (3,00 Mol) | Methylpolyethylenglykol-1100-monovinylether |
| 33,00 g | (0,0165 Mol) | Poly(EO-block-PO)-maleinamidsäure wurden |
| 175,00 g | (0,50 Mol) | einesMethylpolyethylenglykolmethacrylates (MW = 350 g/Mol) |

in das Vorlagegemisch gegeben.

Der Anteil von Acrylsäure im Zulauf 1 blieb unverändert (3,90 Mol). Wie im Beispiel 1 wurde eine gelblich gefärbte trübe lagerstabile wässrige Suspension erhalten mit einem Feststoffgehalt von 42,7 Gew.-% (M = 39900 g/Mol, Ausbeute: 9402 g).

### Beispiel 5

Ein Copolymer aus

| | |
|---|---|
| 1,37 Mol | Methacrylsäure (Zulauf) |
| 0,68 Mol | Ethylenglykolmonovinylether (Vorlage) |
| 0,005 Mol | Poly(EO₄-block-PO₂₇)-maleinsäuremonoamid (Vorlage) |
| 0,55 Mol | Methylpolyethylenglykol-1 100-monomaleinat (Vorlage) |
| 0,10 Mol | Maleinsäureanhydrid (Zulauf) |

wurde wie Beispiel 1 beschrieben hergestellt, wobei jedoch anstelle von Acrylsäure, Methacrylsäure als 25 %ige wässrige Lösung zugegeben wurde. Außerdem wurde ein zusätzlicher Zulauf bestehend aus einer 25 %igen Maleinsäureanhydridlösung in Wasser verwendet. Zusätzlich wurde in der Vorlage Methylpolyethylenglykol-1100-monomaleinat eingesetzt.

Das erhaltene weiße wässrig-trübe Endprodukt enthielt einen Polymergehalt von 43,7 Gew.-% bei einem mittleren Molekulargewicht von 36500 g/Mol.

### Beispiel 6

Beispiel 1 wurde wiederholt, jedoch wurden zusätzlich 78,00 g (0,75 Mol) Styrol in der Vorlage dispergiert. Das geruchlose Endprodukt hatte eine hellgelbe Farbe (Feststoffgehalt: 42,0 Gew.-%; MW = 37000 g/Mol).

### Beispiel 7

Beispiel 1 wurde wiederholt, wobei statt des Umsatzproduktes von Poly(EO-block-PO)-amin mit Maleinsäureanhydrid eine reine Polypropylenglykol-bis-maleinamidsäure (MW = 2000) in einer Menge von 30,00 g (0,150 Mol) verwendet wurde.

Feststoffgehalt des Endproduktes: 41,3 Gew.-%
Gewichtsmittleres Molekulargewicht: 36400 g/Mol

### Beispiele 8 bis 10

In den Beispielen 8, 9 und 10 wurden folgende antilufteinführenden Komponenten verwendet (sonst wie Beispiel 1):

| | | |
|---|---|---|
| Beispiel 8 | 0,010 Mol | Polydimethylsiloxan-bis-(1-propyl-3-methacrylat) (MW 1100) |
| Beispiel 9 | 0,350 Mol | Di-n-Butylmaleinat |
| Beispiel 10 | 0,0075 Mol | Polydimethylsiloxan-bis-(dipropylenaminomaleinamidsäure) (MW 5400) |

In den nachfolgend beschriebenen Anwendungsbeispielen 1 und 2 werden erfindungsgemäße Copolymere der Beispiele 1 bis 10 mit den bekannten Betonzusatzmitteln der Vergleichsbeispiele 1 bis 3 verglichen.

### Beispiel 11

In einem 500 ml Doppelwandreaktionsgefäß wurden vorgelegt: 24,2 g Methylpolyethylenglykol-1100-monovinylether (0,022 Mol), mit N₂ inertisiert und auf 85 °C aufgeheizt.

Aus drei verschiedenen Zuläufen wurden über einen Zeitraum von 120 min zugesetzt:
1. 25,48 g (0,26 Mol) MSA gelöst in 217,8 g (0,198 Mol) Methylpolyethylenglykol-1100-monovinylether sowie 2,68 g (0,01 Mol) Dibutylmaleinat (Temperatur des Zulaufs: 50 °C)
2. 36,72 g (0,51 Mol) Acrylsäure
3. 6,14 g Azo-bis-isobutyronitril in 50 ml Aceton

Nach vollständiger Zugabe erfolgte eine 2-stündige Nachreaktion unter gleichzeitiger Entfernung des Acetons.

Das Produkt (braun) wurde mit der gleichen Menge (ca. 307 g) Wasser verdünnt und mit 20 %-iger Natronlauge auf pH 7,0 neutralisiert.
- Feststoffgehalt des Endprodukts: 38,0 Gew.-%
- Molekulargewicht (Gewichtsmittel): 30 200 g/Mol
- Aussehen: trüb, braun

### Vergleichsbeispiel 1

Käufliches Betonfließmittel "Melment L 10" auf der Basis eines sulfonierten Melamin-Formaldehyd-Polykondensates.

### Vergleichsbeispiel 2

Maleinsäuremonoester-Styrol-Copolymerisat mit der Handelsbezeichnung POZZOLITH 330 N.

### Vergleichsbeispiel 3

Beispiel 1 der DE 195 13 126 A 1 wurde nachvollzogen und das erhaltene Produkt als Vergleich herangezogen.

Die wässrigen Copolymerisat-Zubereitungen der Erfindung und die Mittel der drei Vergleichsbeispiele wurden vergleichend getestet als Fließmittel in zementhaltigen Suspensionen.

Hierbei werden die überragenden Verarbeitungseigenschaften (Slump loss-Verfahren) der Gruppe wässriger Produkte der Erfindung in einer Transportbetonrezeptur belegt, während ihre Tendenz sehr hohe Frühfestigkeiten auszubilden infolge einer extrem hohen Reduktion des Wasser : Zement-Anteils in einer Rezeptur zur Herstellung von Betonfertigteilen belegt wird.

### Anwendungsbeispiel 1 (Transportbetonherstellung)

Normgemäß wurden in einem Betonzwangsmischer 4,5 kg Portlandzement (CEM I 42,5 R Kiefersfelden) mit 33,0 kg Zuschlägen (Sieblinie 0 bis 32 mm) und 2,7 kg Wasser (einschließlich des Wassers aus dem Zusatzmittel) vermischt.

Die wässrigen Lösungen der erfindungsgemäßen bzw. der Vergleichsprodukte wurden zugesetzt und 10 bzw. 40 Minuten nach Zugabe des Additives erfolgte die Bestimmung der Ausbreitmasse nach DIN 1048 (Doppelbestimmung).

Im Anschluss an die Messung der Ausbreitmasse nach 10 Minuten wurden Prüfkörper mit 15 x 15 x 15 cm Kantenlänge hergestellt und die Druckfestigkeit nach 24 h sowie der Luftporenanteil (aus dem Raumgewicht der erhärteten Prüfkörper) bestimmt.

Die Ergebnisse sind in Tabelle 1 zusammengestellt:

**Tabelle 1:**

| Transportbeton-Prüfergebnisse | | | | | | |
|---|---|---|---|---|---|---|
| ZusatzZmittel | Feststoff [% w/w] | Dosierung¹⁾[% w/w] | Ausbreitmaß in cm nach | | Luft [% v/v] | 24 h-Druckf. [MPa] |
| | | | 10 min. | 40 min. | | |
| Bsp. 1 | 41,6 | 0,20 | 67,00 | 58,50 | 2,1 | 14,4 |
| Bsp. 2 | 42,0 | 0,25 | 65,50 | 59,00 | 2,4 | 14,8 |
| Bsp. 3 | 43,0 | 0,20 | 63,25 | 56,50 | 1,9 | 15,0 |
| Bsp. 4 | 42,7 | 0,20 | 62,75 | 57,00 | 2,3 | 14,0 |
| Bsp. 5 | 43,7 | 0,20 | 65,00 | 56,00 | 2,6 | 14,2 |
| Bsp. 6 | 42,0 | 0,20 | 62,75 | 55,75 | 2,9 | 15,3 |
| Bsp. 7 | 41,3 | 0,20 | 67,25 | 57,00 | 1,7 | 14,9 |
| Bsp. 8 | 41,5 | 0,20 | 65,75 | 56,25 | 1,4 | 15,1 |
| Bsp. 9 | 42,3 | 0,20 | 67,75 | 60,00 | 3,0 | 14,0 |
| Bsp. 10 | 42,0 | 0,20 | 66,50 | 59,00 | 1,3 | 15,2 |
| Vgl. 1 | 45,3 | 0,58 | 57,25 | 41,00 | 1,6 | 15,0 |
| Vgl. 2 | 34,9 | 0,25 | 53,75 | 44,75 | 2,5 | 13,7 |
| Vgl. 3 | 37,0 | 0,25 | 58,50 | 48,50 | 1,9 | 11,3 |

| | | | | | | |
|---|---|---|---|---|---|---|
| ¹⁾ Polymerfeststoff bezogen auf das Zementgewicht 280 kg CEM l/m³ Beton | | | | | | |

### Anwendungsbeispiel 2 (Fertigteilbetonrezeptur)

Die Durchführung erfolgte wie im Anwendungsbeispiel 1 beschrieben, jedoch mit 5,75 kg Zement, 2,3 kg Wasser (einschl. Wasser aus dem Additiv) und 33,0 kg Zuschlag mit leicht veränderter Sieblinie.

Die Ergebnisse sind in der Tabelle 2 zusammengefasst:

**Tabelle 2:**

| Prüfergebnisse ausgewählter Produkte in Fertigteilbeton | | | | | | |
|---|---|---|---|---|---|---|
| Zusatzmittel | Feststoff [% w/w] | Dosierung¹⁾ [% w/w] | Ausbreitmaß in cm nach | | Luft [% v/v] | 24 h-Druckf. [MPa] |
| | | | 10 min. | 40 min.z | | |
| Bsp. 1 | 41,6 | 0,30 | 56,50 | 53,25 | 1,8 | 39,6 |
| Bsp. 2 | 42,0 | 0,24 | 60,75 | 56,50 | 1,4 | 40,4 |
| Bsp. 3 | 43,0 | 0,30 | 59,25 | 55,00 | 1,9 | 38,9 |
| Bsp. 6 | 42,0 | 0,30 | 56,75 | 54,75 | 2,4 | 40,1 |
| Bsp. 7 | 41,3 | 0,30 | 60,00 | 54,25 | 1,3 | 39,9 |
| Vgl. 1 | 45,3 | 0,92 | 37,50 | - | 1,4 | 38,7 |
| Vgl. 2 | 34,9 | 0,30 | 48,50 | 40,00 | 1,9 | 34,6 |
| Vgl. 3 | 37,0 | 0,30 | 49,75 | 43,25 | 1,7 | 19,4 |

| | | | | | | |
|---|---|---|---|---|---|---|
| ¹⁾ Polymerfeststoff bezogen auf das Zementgewicht 350 kg CEM l/m³ Beton | | | | | | |

## Patentansprüche

1. Copolymeres auf Basis der Reste von ungesättigten Mono- oder Dicarbonsäure-Derivaten und Oxyalkylenglykol-Alkenylethern,
**dadurch gekennzeichnet,**
**dass** sie
a) 51 bis 95 Mol.-% Baugruppen der Formel Ia und/oder Ib und/oder Ic 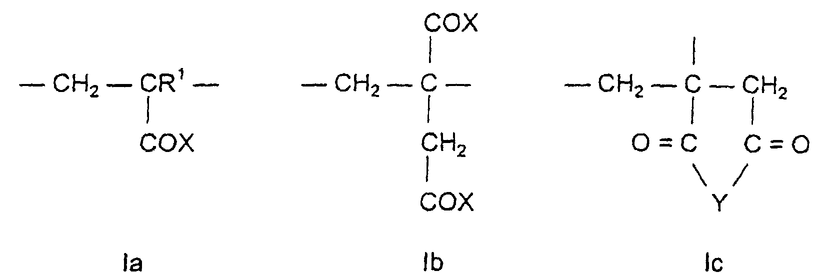 worin
R¹ = Wasserstoff oder einen aliphatischen Kohlenwasserstoffrest mit 1 bis 20 C-Atomen,
X = OₐM, -O-(CₘH₂ₘO)ₙ-R², -NH-(CₘH₂ₘO)ₙ-R²,
M = Wasserstoff, ein ein- oder zweiwertiges Metallkation, ein Ammoniumion oder einen organischen Aminrest,
a = ½ oder 1,
R² = Wasserstoff, einen atiphatischen Kohlenwasserstoffrest mit 1 bis 20 C-Atomen, einen cycloaliphatischen Kohlenwasserstoffrest mit 5 bis 8 C-Atomen, einen gegebenenfalls substituierten Arylrest mit 6 bis 14 C-Atomen,
Y = O, NR²,
m = 2 bis 4 und
n = 0 bis 200
bedeuten,
b) 1 bis 48,9 Mol-% Baugruppen der allgemeinen Formel II 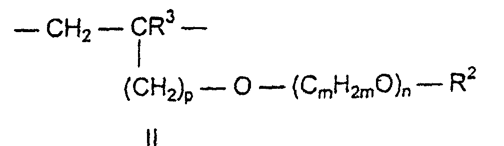 worin
R³ Wasserstoff oder einen aliphatischen Kohlenwasserstoffrest mit 1 bis 5 C-Atomen
p 0 bis 3
bedeuten und R², m und n die oben genannte Bedeutung besitzen,
c) 0,1 bis 5 Mol-% Baugruppen der Formel IIIa oder IIIb 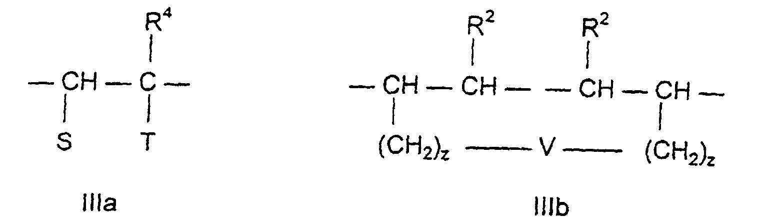 worin
S = H, -COOₐM, -COOR⁵
T = 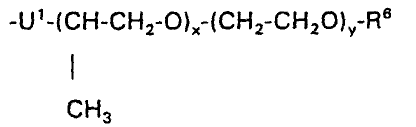 -CO-[NH-(CH₂)₃]ₛ-W-R⁷
-CO-O-(CH₂)_{z}-W-R⁷
-(CH₂)_{z}-V-(CH₂)_{z}-CH=CH-R²
-COOR⁵ im Falle von S = -COOR⁵ oder COOₐM
U¹ = -CO-NH-, -O-, -CH₂O-
U² = -NH-CO-, -O-, -OCH₂-
V = -O-CO-C₆H₄-CO-O- oder -W- 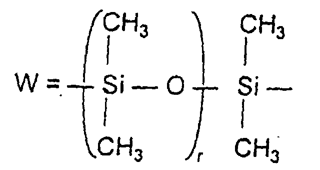
R⁴ = H, CH₃
R⁵ = aliphatischen Kohlenwasserstoffrest mit 3 bis 20 C-Atomen, cycloaliphatischen Kohlenwasserstoffrest mit 5 bis 8 C-Atomen, Arylrest mit 6 bis 14 C-Atomen
R⁶ = 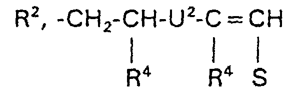
R⁷ = 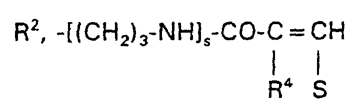 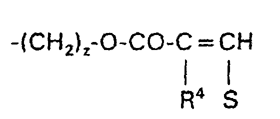
r = 2 bis 100
s = 1, 2
z= 0 bis 4
x = 1 bis 150
y = 0 bis 15
bedeuten sowie
d) 0 bis 47,9 Mol Baugruppen der allgemeinen Formel IVa und/oder IVb enthalten 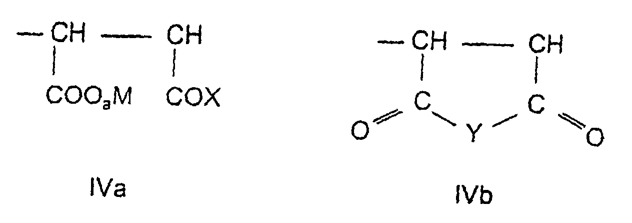
worin a, M, X und Y die oben angegebene Bedeutung besitzen.

2. Copolymeres nach Anspruch 1,
**dadurch gekennzeichnet,**
**dass** R¹ einen Methylrest darstellt.

3. Copolymeres nach den Ansprüchen 1 oder 2,
**dadurch gekennzeichnet,**
**dass** M ein ein- oder zweiwertiges Metallkation, ausgewählt aus der Gruppe Natrium-, Kalium-, Calcium- oder Magnesiumionen, ist.

4. Copolymeres nach einem der Ansprüche 1 bis 3,
**dadurch gekennzeichnet,**
**dass** im Falle von R² = Phenyl der Phenylrest durch eine oder mehrere Hydroxyl-, Carboxyl- oder Sulfonsäure-Gruppe substituiert ist.

5. Copolymeres nach einem der Ansprüche 1 bis 4,
**dadurch gekennzeichnet,**
**dass** in der Formel II p = 0 und m = 2 bedeuten.

6. Copolymeres nach einem der Ansprüche 1 bis 5,
**dadurch gekennzeichnet,**
**dass** es 55 bis 75 Mol-% Baugruppen der Formel la und/oder Ib und/oder Ic, 19,5 bis 39,5 Mol-% Baugruppen der Formel II, 0,5 bis 2 Mol-% Baugruppen der Formel IIIa und/oder IIIb sowie 5 bis 20 Mol-% Baugruppen der Formel IVa und/oder IVb enthält.

7. Copolymeres nach einem der Ansprüche 1 bis 6,
**dadurch gekennzeichnet,**
**dass** es zusätzlich bis zu 50 Mol.-%, insbesondere bis zu 20 Mol.-%, bezogen auf die Summe der Baugruppen der Formel I, II, III und IV Baugruppen enthält, deren Monomere ein Vinyl- oder (Meth-)Acrylsäure-Derivat ist.

8. Copolymeres nach Anspruch 7,
**dadurch gekennzeichnet,**
**dass** die zusätzlichen Baugruppen aus monomerem Vinylderivat Styrol, α-Methylstyrol, Vinylacetat, Vinylpropionat, Ethylen, Propylen, Isobuten, N-Vinylpyrrolidon, Allylsulfonsäure, Methallylsulfonsäure, Vinylsulfonsäure oder Vinylphosphonsäure gebildet sind.

9. Copolymeres nach Anspruch 7,
**dadurch gekennzeichnet,**
**dass** die zusätzlichen Baugruppen aus monomerem (Meth-)Acrylsäureserivat Hydroxyalkyl(meth)acrylat, Acrylamid, Methacrylamid, AMPS, Methylmethacrylat, Methylacrylat, Butylacrylat oder Cyclohexylacrylat gebildet sind.

10. Copolymeres nach einem der Ansprüche 1 bis 9,
**dadurch gekennzeichnet,**
**dass** es ein mittleres Molekulargewicht von 1000 bis 100.000 g/Mol aufweist.

11. Verfahren zur Herstellung eines Copolymeren nach einem der Ansprüche 1 bis 10,
**dadurch gekennzeichnet,**
**dass** man
a) 51 bis 95 Mol-% eines ungesättigten Mono- oder Dicarbonsäure-Derivats,
b) 1 bis 48,9 Mol-% eines Oxyalkylenglykol-Alkenylethers,
c) 0,1 bis 5 Mol-% einer vinylischen Polyalkylenglykol-, Polysiloxan- oder Ester-Verbindung sowie
d) 0 bis 47,9 Mol-% eines Dicarbonsäure-Derivats mit Hilfe eines radikalischen Starters polymerisiert.

12. Verfahren nach Anspruch 11,
**dadurch gekennzeichnet,**
**dass** man 55 bis 75 Mol-% eines ungesättigten Mono- oder Dicarbonsäure-Derivats, 19,5 bis 39,5 Mol-% eines Oxyalkylenglykol-Alkenylethers, 0,5 bis 2 Mol-% einer vinylischen Polyalkylenglykol-, Polysiloxan- oder Ester-Verbindung und 5 bis 20 Mol-% eines Dicarbonsäure-Derivats einsetzt.

13. Verfahren nach einem der Ansprüche 11 und 12,
**dadurch gekennzeichnet,**
**dass** man noch zusätzlich bis zu 50 Mol-%, insbesondere bis zu 20 Mol-%, bezogen auf die Monomeren mit den Baugruppen gemäß den Formeln I, II, III und IV eines Vinyl- oder (Meth-)Acrylsäure-Derivats copolymerisiert.

14. Verfahren nach einem der Ansprüche 11 bis 13,
**dadurch gekennzeichnet,**
**dass** man die Polymerisation in wässriger Lösung bei einer Temperatur von 20 bis 100 °C durchführt.

15. Verfahren nach Anspruch 14,
**dadurch gekennzeichnet,**
**dass** die Konzentration der wässrigen Lösung 30 bis 50 Gew.-% beträgt.

16. Verfahren nach einem der Ansprüche 11 bis 13,
**dadurch gekennzeichnet,**
**dass** man die Polymerisation ohne Lösemittel mit Hilfe eines radikalischen Starters bei Temperaturen von 20 bis 150 °C durchführt.

17. Verwendung eines Copolymeren nach einem der Ansprüche 1 bis 10 als Zusatzmittel für wässrige Suspensionen auf Basis von mineralischen oder bituminösen Bindemitteln, insbesondere Zement, Gips, Kalk, Anhydrit, oder sonstige auf Calciumsulfat-basierende Bindemittel sowie auf Basis von pulverförmigen Dispersionsbindemitteln.

18. Verwendung eines Copolymeren nach Anspruch 17,
**dadurch gekennzeichnet,**
**dass** es in einer Menge von 0,01 bis 10 Gew.-%, vorzugsweise 0,1 bis 5 Gew.-%, bezogen auf das Gewicht des mineralischen Bindemittels, eingesetzt wird.

## Claims

1. Copolymer based on radicals of unsaturated monocarboxylic or dicarboxylic acid derivatives and oxyalkylene glycol alkenyl ethers, **characterized in that** they comprise
a) from 51 to 95 mol% of structural units of the formula Ia and/or Ib and/or Ic 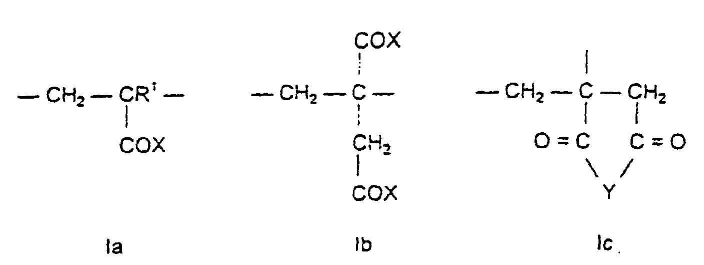 where
R¹ = hydrogen or an aliphatic hydrocarbon radical having from 1 to 20 carbon atoms,
X = OₐM, -O-(CₘH₂ₘO)ₙ-R², -NH-(CₘH₂ₘO)ₙ-R²,
M = hydrogen, a monovalent or divalent metal cation, an ammonium ion or an organic amine radical,
a= ½ or 1,
R² = hydrogen, an aliphatic hydrocarbon radical having from 1 to 20 carbon atoms, a cycloaliphatic hydrocarbon radical having from 5 to 8 carbon atoms, a substituted or unsubstituted aryl radical having from 6 to 14 carbon atoms,
Y = O, NR²,
m = 2 to 4 and
n = 0 to 200,
b) from 1 to 48.9 mol% of structural units of the general formula II 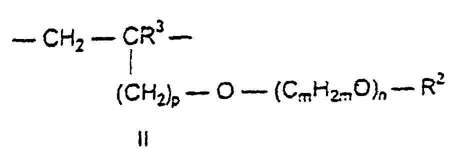 where
R³ is hydrogen or an aliphatic hydrocarbon radical having from 1 to 5 carbon atoms,
p is from 0 to 3
and R², m and n are as defined above,
c) from 0.1 to 5 mol% of structural units of the formula IIIa or IIIb 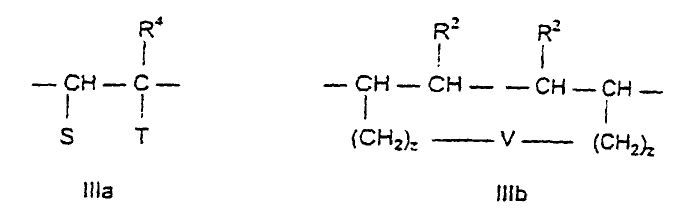 where
S = H, -COOₐM, -COOR⁵,
T = 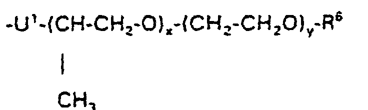 -W-R⁷
-CO-[NH- (CH₂)₃]ₛ-W-R⁷
-CO-O-(CH₂)_{z}-W-R⁷
- (CH₂)_{z}-V-(CH₂)_{z}-CH=CH-R²
-COOR⁵ in the case of S = -COOR⁵ or COOₐM
U¹= -CO-NH-, -O-, -CH₂O-
U² = -NH-CO-, -O-, -OCH₂-
V = -O-CO-C₆H₄-CO-O- or -W- 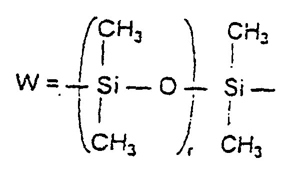
R⁴ = H, CH₃,
R⁵ = an aliphatic hydrocarbon radical having from 3 to 20 carbon atoms, a cycloaliphatic hydrocarbon radical having from 5 to 8 carbon atoms, an aryl radical having from 6 to 14 carbon atoms,
R⁶ = 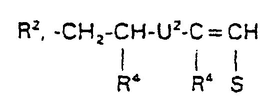
R⁷ = 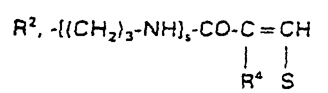 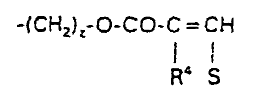
r = 2 to 100
s = 1, 2
z = 0 to 4
x = 1 to 150
y = 0 to 15
and
d) from 0 to 47.9 mol [lacuna] of structural units of the general formula IVa and/or IVb 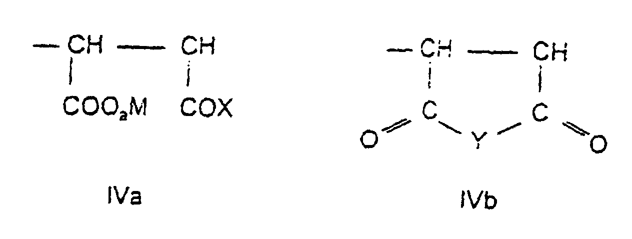
where a, M, X and Y are as defined above.

2. Copolymer according to Claim 1, **characterized in that** R¹ is a methyl radical.

3. Copolymer according to Claim 1 or 2, **characterized in that** M is a monovalent or divalent metal cation selected from the group consisting of sodium, potassium, calcium and magnesium ions.

4. Copolymer according to any of Claims 1 to 3, **characterized in that** when R² = phenyl, the phenyl radical is substituted by one or more hydroxyl, carboxyl or sulphonic acid groups.

5. Copolymer according to any of Claims 1 to 4, **characterized in that**, in the formula II, p = 0 and m = 2.

6. Copolymer according to any of Claims 1 to 5, **characterized in that** it comprises from 55 to 75 mol% of structural units of the formula Ia and/or Ib and/or Ic, from 19.5 to 39.5 mol% of structural units of the formula II, from 0.5 to 2 mol% of structural units of the formula IIIa and/or IIIb and from 5 to 20 mol% of structural units of the formula IVa and/or IVb.

7. Copolymer according to any of Claims 1 to 6, **characterized in that** it further comprises up to 50 mol%, in particular up to 20 mol%, based on the sum of the structural units of the formulae I, II, III and IV, of structural units whose monomer is a vinyl or (meth)acrylic acid derivative.

8. Copolymer according to Claim 7, **characterized in that** the additional structural units are formed from a monomeric vinyl derivative styrene, α-methylstyrene, vinyl acetate, vinyl propionate, ethylene, propylene, isobutene, n-vinyl-pyrrolidone, allylsulphonic acid, methallylsulphonic acid, vinylsulphonic acid or vinylphosphonic acid.

9. Copolymer according to Claim 7, **characterized in that** the additional structural units are formed from a monomeric (meth)acrylic acid derivative hydroxyalkyl (meth)acrylate, acrylamide, methacrylamide, AMPS, methyl methacrylate, methyl acrylate, butyl acrylate or cyclohexyl acrylate.

10. Copolymer according to any of Claims 1 to 9, **characterized in that** it has a mean molecular weight of from 1000 to 100,000 g/mol.

11. Process for preparing a copolymer according to any of Claims 1 to 10, **characterized in that**
a) from 51 to 95 mol% of an unsaturated monocarboxylic or dicarboxylic acid derivative,
b) from 1 to 48.9 mol% of an oxyalkylene glycol alkenyl ether,
c) from 0.1 to 5 mol% of a vinylic polyalkylene glycol, polysiloxane or ester compound and
d) from 0 to 47.9 mol% of a dicarboxylic acid derivative are polymerized with the aid of a free-radical initiator.

12. Process according to Claim 11, **characterized in that** from 55 to 75 mol% of an unsaturated monocarboxylic or dicarboxylic acid derivative, from 19.5 to 39.5 mol% of an oxyalkylene glycol alkenyl ether, from 0.5 to 2 mol% of a vinylic polyalkylene glycol, polysiloxane or ester compound and from 5 to 20 mol% of a dicarboxylic acid derivative are used.

13. Process according to Claim 11 or 12, **characterized in that** up to 50 mol%, in particular up to 20 mol%, based on the monomers comprising the structural units of the formulae I, II, III and IV, of a vinyl or (meth)acrylic acid derivative are additionally copolymerized.

14. Process according to any of Claims 11 to 13, **characterized in that** the polymerization is carried out in aqueous solution at a temperature of from 20 to 100°C.

15. Process according to Claim 14, **characterized in that** the concentration of the aqueous solution is from 30 to 50% by weight.

16. Process according to any of Claims 11 to 13, **characterized in that** the polymerization is carried out without solvents with the aid of a free-radical initiator at temperatures of from 20 to 150°C.

17. Use of a copolymer acccording to any of Claims 1 to 10 as an additive to aqueous suspensions based on mineral or bituminous binders, in particular cement, plaster of Paris, lime, anhydrite or other binders based on calcium sulphate or binders based on pulverulent dispersion binders.

18. Use of a copolymer according to Claim 17, **characterized in that** it is used in an amount of from 0.01 to 10% by weight, preferably from 0.1 to 5% by weight, based on the weight of the mineral binder.

## Revendications

1. Copolymères à base de restes de dérivés d'acide mono- ou dicarboxylique insaturé et d'oxyalkylèneglycol-alcényléthers, **caractérisés en ce qu'**ils contiennent :
a) 51 à 95% en moles de groupes structuraux de la formule Ia et/ou Ib et/ou Ic : 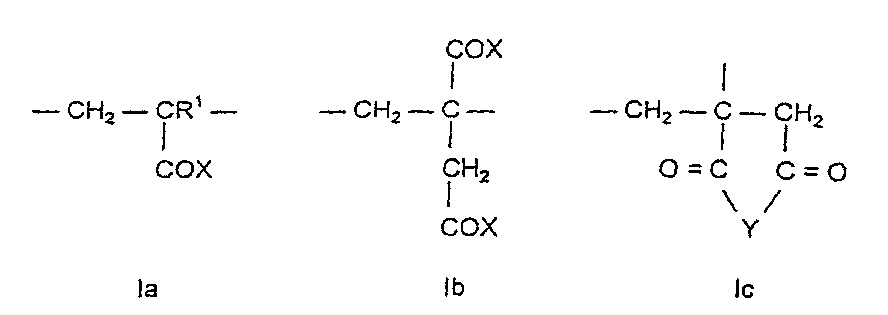 où
R¹ = hydrogène ou un reste hydrocarbure aliphatique ayant 1 à 20 atomes C,
X = OₐM, -O-(CₘH₂ₘO)ₙ-R², -NH-(CₘH₂ₘO)ₙ-R²,
M = hydrogène, un cation métallique mono- ou bivalent, un ion ammonium ou un reste amine organique,
a = 1/2 ou 1,
R² = hydrogène, un reste hydrocarbure aliphatique ayant 1 à 20 atomes C, un reste hydrocarbure cycloaliphatique ayant 5 à 8 atomes C, un reste aryle ayant 6 à 14 atomes C, le cas échéant substitué,
Y = O , NR²,
m = 2 à 4, et
n = 0 à 200,
b) 1 à 48,9% en moles de groupes structuraux de la formule générale II : 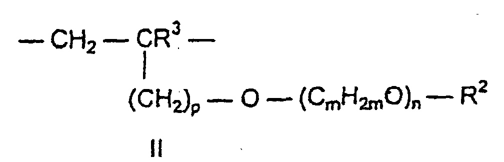 où
R³ représente hydrogène ou un reste hydrocarbure aliphatique ayant 1 à 5 atomes C,
p est 0 à 3, et
R², m et n possèdent la signification indiquée ci-dessus,
c) 0,1 à 5% en moles de groupes structuraux de la formule IIIa ou IIIb : 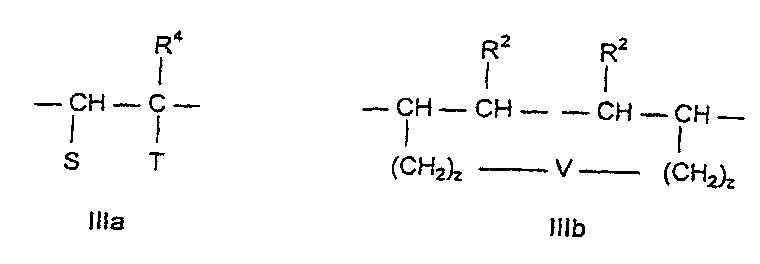 où
S = H, -COOₐM, -COOR⁵
T = 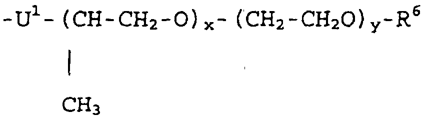 -W-R⁷
-CO-[NH-(CH₂)₃]ₛ-W-R⁷
-CO-O- (CH₂)_{z}-W-R⁷,
- (CH₂)_{z}-V-(CH₂)_{z}-CH=CH-R² -COOR⁵ dans le cas où S = -COOR⁵ ou COOₐM
U¹ = CO-NH-, -O-, -CH₂O-
U² = NH-CO-, -O-, -OCH₂-
V = -O-CO-C₆H₄-CO-O- ou W 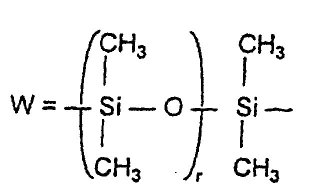
R⁴ = H, CH₃
R⁵ = un reste hydrocarbure aliphatique ayant 3 à 20 atomes C, un reste hydrocarbure cycloaliphatique ayant 5 à 8 atomes C, un reste aryle ayant 6 à 14 atomes C,
R⁶ = R², 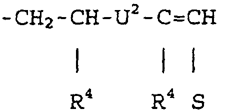
R⁷ = R², 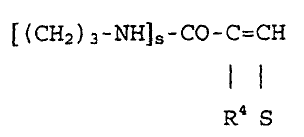 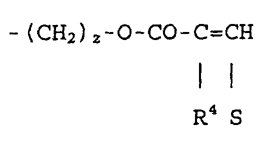
r = 2 à 100,
s = 1, 2,
z = 0 à 4,
x = 1 à 150,
y = 0 à 15,
ainsi que
d) 0 à 47,9 moles de groupes structuraux de la formule générale IVa et/ou IVb : 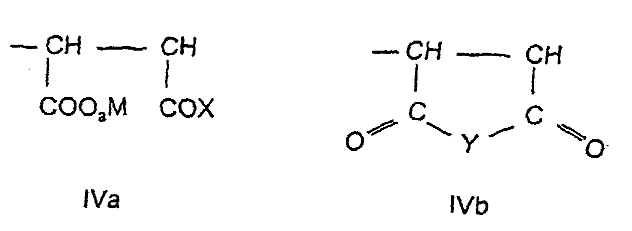
où a, M, X et Y possèdent la signification indiquée ci-dessus.

2. Copolymères selon la revendication 1, **caractérisés en ce que** R¹ représente un reste méthyle.

3. Copolymères selon la revendication 1 ou 2, **caractérisés en ce que** M est un cation métallique mono- ou bivalent, choisi parmi le groupe des ions de sodium, de potassium, de calcium, ou de magnésium.

4. Copolymères selon l'une quelconque des revendications 1 à 3, **caractérisés en ce que** dans le cas où R² = phényle, le reste phényle est substitué par un ou plusieurs radicaux hydroxyle, carboxyle ou acide sulfonique.

5. Copolymères selon l'une quelconque des revendications 1 à 4, **caractérisés en ce que** dans la formule II, p = 0 et m = 2.

6. Copolymères selon l'une quelconque des revendications 1 à 5, **caractérisés en ce qu'**ils contiennent 55 à 75% en moles des groupes structuraux de la formule Ia et/ou Ib et/ou Ic, 19,5 à 39,5% en moles des groupes structuraux de la formule II, 0,5 à 2% en moles des groupes structuraux de la formule IIIa et/ou IIIb ainsi que 5 à 20% en moles des groupes structuraux de la formule IVa et/ou IVb.

7. Copolymères selon l'une quelconque des revendications 1 à 6, **caractérisés en ce qu'**ils contiennent en outre, jusqu'à 50% en moles, en particulier jusqu'à 20% en moles, sur base de la somme des groupes structuraux des formules I, II, III et IV, de groupes structuraux, dont les monomères sont un dérivé vinylique ou d'acide (méth)acrylique.

8. Copolymère selon la revendication 7, **caractérisé en ce que** les groupes structuraux supplémentaires sont formés à partir de dérivés vinylique monomères, tels que le styrène, l'α-méthylstyrène, l'acétate de vinyle, le propionate de vinyle, l'éthylène, de propylène, l'isobutène le N-vinylpyrrolidone, l'acide allylsulfonique, l'acide méthallylsulfonique, l'acide vinylsulfonique ou l'acide vinylphosphonique.

9. Copolymère selon la revendication 7, **caractérisé en ce que** les groupes structuraux supplémentaires sont formés à partir de dérivés acide (méth)acrylique monomères, tels que le (méth)acrylate d'hydroxyalkyle, l'acrylamide, le méthacrylamide, l'AMPS, le méthacrylate de méthyle, l'acylate de méthyle, l'acrylate de butyle ou l'acrylate de cyclohexyle.

10. Copolymères selon l'une quelconque des revendications 1 à 9, **caractérisés en ce qu'**ils présentent un poids moléculaire moyen allant de 1000 à 100 000 g/mole.

11. Procédé de préparation d'un copolymère selon l'une quelconque des revendications 1 à 10, **caractérisé en ce que** l'on polymérise
a) 51 à 95% en moles d'un dérivé d'acide mono- ou dicarboxylique insaturé,
b) 1 à 48,9% en moles d'un oxyalkylèneglycol-alcényléther,
c) 0,1 à 5% en moles d'un composé polyalkylèneglycol, polysiloxane ou ester vinylique, ainsi que
d) 0 à 47,9% en moles d'un dérivé d'acide dicarboxylique à l'aide d'un initiateur radicalaire.

12. Procédé selon la revendication 11, **caractérisé en ce que** l'on met en oeuvre 55 à 75% en moles d'un dérivé d'acide mono- ou dicarboxylique insaturé, 19,5 à 39,5% en moles d'un oxyalkylèneglycol-alcényléther, 0,5 à 2% en moles d'un composé polyalkylèneglycol, polysiloxane ou ester vinylique, et 5 à 20% en moles d'un dérivé d'acide dicarboxylique.

13. Procédé selon la revendication 11 et 12, **caractérisé en ce que** l'on copolymérise en outre, jusqu'à 50% en moles, en particulier jusqu'à 20% en moles, sur la base des monomères avec les groupes structuraux des formules I, II, III et IV, d'un dérivé vinylique ou d'acide (méth)acrylique.

14. Procédé selon l'une quelconque des revendications 11 à 13, **caractérisé en ce que** l'on réalise la polymérisation en solution aqueuse à une température allant de 20 à 100°C.

15. Procédé selon la revendication 14, **caractérisé en ce que** la concentration de la solution aqueuse se situe dans la gamme allant de 30 à 50% en poids.

16. Procédé selon l'une quelconque des revendications 11 à 13, **caractérisé en ce que** l'on réalise la polymérisation sans solvant, à l'aide d'un initiateur radicalaire à une température allant de 20 à 150°C.

17. Utilisation d'un copolymère selon l'une quelconque des revendications 1 à 10, comme additif pour des suspensions aqueuses à base de liants minéraux ou bitumineux, en particulier de ciment, de plâtre, de chaux, d'anhydrite ou de certains liants à base de sulfate de calcium ainsi qu'à base de liants pulvérulents de dispersion.

18. Utilisation d'un copolymère selon la revendication 17, **caractérisée en ce qu'**on le met en oeuvre en une quantité allant de 0,01 à 10% en poids, de préférence de 0,1 à 5% en poids, sur base du poids du liant minéral.
